# EUROPÄISCHE PATENTSCHRIFT

(11) **EP 3 693 299 B1**
(45) Veröffentlichungstag und Bekanntmachung des Hinweises auf die Patenterteilung: **16.08.2023**
(21) Anmeldenummer: 19155445.0
(22) Anmeldetag: 05.02.2019
(51) Int. Cl.: B65G 47/51, B65G 47/68

(54) **VORRICHTUNG ZUM KONTINUIERLICHEN FÖRDERN VON FÖRDERGUT UND VERFAHREN ZUM KONTINUIERLICHEN FÖRDERN VON FÖRDERGUT**
DEVICE FOR CONTINUOUSLY CONVEYING MATERIAL AND METHOD FOR CONTINUOUSLY CONVEYING MATERIAL
DISPOSITIF DE TRANSPORT CONTINU DES MARCHANDISES TRANSPORTÉES ET PROCÉDÉ DE TRANSPORT CONTINU DES MARCHANDISES

(43) Veröffentlichungstag der Anmeldung: 12.08.2020
(73) Patentinhaber: Illinois Tool Works, Inc., Glenview, Illinois 60025 (US)
(72) Erfinder: KORTE, Hartmut, 49565 Bramsche (DE)
(74) Vertreter: Meissner Bolte Partnerschaft mbB

(56) Entgegenhaltungen:
- CN-A- 106 629 092
- JP-A- H07 267 351
- US-A1- 2014 001 008

## Beschreibung

Die Erfindung betrifft eine Vorrichtung zum kontinuierlichen Fördern von Fördergut und ein Verfahren zum kontinuierlichen Fördern von Fördergut.

Die Druckschrift JP-H07267351 A betrifft eine Überführungseinrichtung für eine Vorrichtung zum kontinuierlichen Fördern von Fördergut, wobei die Vorrichtung einen Speicher mit zumindest einer Mehrzahl von Speicherbahnen, in denen Fördergut angeordnet ist, und eine Folge-Förderbahn zu einer Folgeeinrichtung aufweist.

Eine solche Überführungseinrichtung ist auch aus der Druckschrift US 2014/001008 A1 bekannt. Die US2014/001008 A1 offenbart die Merkmale der Oberbegriffe der Ansprüche 1 und 9.

In Fertigungsstraßen oder Produktionsstraßen, bei denen mehrere Bearbeitungsstationen bzw. Maschinen durch Materialflusssysteme nach dem Linienprinzip verbunden sind, sind zum Ausgleich von Taktunterschieden, Rüstzeiten oder kurzfristigen Störungen an Komponenten der Straße Pufferstrecken bzw. Speicher integriert. Diese Speicher sorgen somit dafür, dass die Fertigungsstraße kürzere Unterbrechungen ohne einen Produktionsstopp oder einer Produktionsverlangsamung ausgleichen kann.

Dabei ist es nötig, das im Speicher gespeicherte Fördergut aus dem Speicher zu einem Zuführungssystem der im Materialfluss folgenden Bearbeitungsstation zuzuführen.

Oftmals sind diese Speicher mit mehreren Speicherbahnen ausgebildet, wobei im Produktionsablauf zwischen den Speicherbahnen gewechselt werden kann bzw. muss. Der Wechsel der Speicherbahnen benötigt hierbei Zeit, sodass eine größere Lücke zwischen zu transportierenden Stücken (Fördergut) einer vorherigen Speicherbahn und einer anschließenden Speicherbahn entsteht und eine kontinuierliche Förderung nicht mehr möglich ist.

Dies führt dazu, dass eine nachfolgende Bearbeitungsstation bzw. Maschine für einen entsprechenden Zeitraum stillsteht, was den Produktionsablauf ineffizient gestaltet. Außerdem gibt es Bearbeitungsstationen, die so ausgebildet sind, dass sie eine solche Lücke bei der Zuführung des zu bearbeitenden Förderguts nicht oder nur sehr schlecht bewältigen können. Entsprechend sind die Produktions- bzw. Fertigungsabläufe gestört und die Wirtschaftlichkeit der Produktion sinkt.

Der Erfindung liegt daher die Aufgabe zugrunde, eine Vorrichtung zum kontinuierlichen Fördern von Fördergut anzugeben, die die oben genannten Probleme und Nachteile des Standes der Technik ausräumt. Insbesondere ist es Aufgabe der vorliegenden Erfindung, eine Überführungseinrichtung anzugeben, bei der die kontinuierliche Förderung von Fördergut derart sichergestellt wird, dass der Produktionsablauf störungsfrei funktionieren kann.

Außerdem liegt der Erfindung die Aufgabe zugrunde, ein Verfahren zum kontinuierlichen Fördern von Fördergut anzugeben, das ebenfalls die oben genannten Probleme und Nachteile des Standes der Technik ausräumt.

Die der Erfindung zu Grunde liegende Aufgabe wird durch den Gegenstand des unabhängigen Patentanspruchs 1 gelöst, der eine Vorrichtung zum kontinuierlichen Fördern von Fördergut betrifft. Vorteilhafte Weiterbildungen der erfindungsgemäßen Vorrichtung sind in den abhängigen Ansprüchen 2 bis 8 angegeben. Der nebengeordnete Patentanspruch 9 betrifft ein entsprechendes Verfahren zum kontinuierlichen Fördern von Fördergut mittels einer solchen Vorrichtung.

Die erfindungsgemäße Lösung ist insbesondere in einer Überführungseinrichtung für eine Vorrichtung zum kontinuierlichen Fördern von Fördergut zu sehen, wobei die Vorrichtung einen Speicher mit zumindest einer Mehrzahl, vorzugsweise einer Vielzahl, von Speicherbahnen, in denen Fördergut angeordnet ist, und eine Folge-Förderbahn zu einer Folgeeinrichtung aufweist, wobei die Überführungseinrichtung zwischen dem Speicher und der Folge-Förderbahn angeordnet ist und dazu ausgebildet ist, Fördergut von einer ausgewählten Speicherbahn des Speichers zu der Folge-Förderbahn zu überführen, wobei die Überführungseinrichtung Folgendes aufweist: eine Zuführungskomponente, die dazu ausgebildet ist, von der ausgewählten Speicherbahn Fördergut aufzunehmen; eine Abführungskomponente, die dazu ausgebildet ist, das Fördergut an die Folge-Förderbahn abzuführen; und eine Überführungsbahn, die dazu ausgebildet ist, das Fördergut von der Zuführungskomponente zu der Abführungskomponente zu überführen, wobei die Abführungskomponente so ausgebildet ist, dass sie relativ zu der Folge-Förderbahn derart bewegbar ist, dass selbst beim Wechsel der ausgewählten Speicherbahn eine kontinuierliche Förderung möglich ist.

Mit der erfindungsgemäßen Vorrichtung wird die Aufgabe in zufriedenstellenderweise gelöst.

Insbesondere ist es mit der Überführungseinrichtung möglich, auf einen Wechsel der ausgewählten Speicherbahn derart zu reagieren, dass auf der Folge-Förderbahn eine kontinuierliche Förderung, d. h. eine Förderung mit zumindest im Wesentlichen konstanten Lücken bzw. Abständen zwischen den einzelnen Stücken Fördergut, möglich ist.

Bevorzugt sind die Speicherbahnen parallel zueinander verlaufend angeordnet. Bevorzugt weist jede Speicherbahn einen Ausgang auf, über welchen das Fördergut aus dem Speicher herausführbar ist. Als ausgewählte Speicherbahn wird in diesem Zusammenhang die Speicherbahn des Speichers verstanden, von der Fördergut mittels der Zuführungskomponente aufgenommen wird.

Der Wechsel der Speicherbahn führt dazu, dass zwischen dem Fördergut einer zuvor ausgewählten Speicherbahn und dem Fördergut einer anschließend ausgewählten Speicherbahn eine größere Lücke entsteht. Aufgrund dieser größeren Lücke liegt eine kontinuierliche Förderung zunächst nicht vor.

Diese beim Wechsel der Speicherbahn entstandene Lücke wird durch die Bewegung der Abführungskomponente ausgeglichen. Dies geschieht hierbei insbesondere dadurch, dass die Abführungskomponente entlang der Folge-Förderbahn bewegbar ist bzw. fahren kann, um die Lücke zu kompensieren.

Als Abführungskomponente bzw. Zuführungskomponente wird allgemein ein vorderes Ende bzw. ein hinteres Ende der Überführungseinrichtung verstanden.

Bei der Folge-Förderbahn handelt es sich beispielsweise um eine Zuführungsbahn einer nachfolgenden Maschine.

Gemäß einer vorteilhaften Weiterbildung der Erfindung ist bei der kontinuierlichen Förderung der Abstand zwischen Stücken des zu fördernden Förderguts auf der Folge-Förderbahn zumindest im Wesentlichen konstant.

In diesem Zusammenhang wird eine kleine Abweichung im Abstand zwischen Stücken des zu fördernden Förderguts, die sich beim Förderprozess nicht verhindern lässt oder erforderlich ist, noch als im Wesentlichen konstant angesehen.

Unter kontinuierlicher Förderung wird somit eine gleichmäßige Förderung mit zumindest im Wesentlichen konstanten Lücken verstanden. Mittels der kontinuierlichen Förderung ist somit sichergestellt, dass alle ankommenden Stücke zumindest im Wesentlichen den gleichen Abstand zueinander haben, sodass auch nachfolge Maschinen eingesetzt werden können, die nur bei gleichbleibenden Abständen der Stücke zueinander optimal funktionieren.

Selbstverständlich ist der Abstand zwischen den Stücken des zu fördernden Förderguts jedoch umstellbar bzw. einstellbar, sodass er an die Taktung der nachfolgenden Maschine angepasst werden kann.

Gemäß der Erfindung ist die Zuführungskomponente dazu ausgebildet, sich beim Wechsel der ausgewählten Speicherbahn von einer zuvor ausgewählten Speicherbahn zu einer anschließend ausgewählten Speicherbahn zu bewegen. Insbesondere bewegt sich die Zuführungskomponente zwischen ihr zugewandten Enden bzw. Ausgängen der Speicherbahnen und kann somit von einer ersten beliebigen Speicherbahn zu einer zweiten beliebigen Speicherbahn und anschließend weiter wechseln. Dabei kann die Zuführungskomponente durch einen Motor angetrieben sein.

Der Wechsel der Speicherbahn kann beispielsweise aus folgendem Grund notwendig sein. In der ausgewählten Speicherbahn, d. h. der Speicherbahn, von der aktuell Fördergut aufgenommen wird, ist kein oder nur noch wenig Fördergut vorhanden, sodass zu einer anderen Speicherbahn gewechselt werden soll, die mit Fördergut gefüllt ist.

Erfindungsgemäß ist die Abführungskomponente dazu ausgebildet ist, sich nach einem Wechsel der ausgewählten Speicherbahn von einer ersten Position zu einer zweiten Position an der Folge-Förderbahn zu bewegen, wobei die Distanz zwischen der ersten Position und der zweiten Position der Länge einer Lücke (Abstand) entspricht, die durch den Wechsel der Speicherbahn zwischen einem letzten Stück Fördergut aus einer zuvor ausgewählten Speicherbahn und einem ersten Stück Fördergut aus einer anschließend ausgewählten Speicherbahn entstanden ist.

Beispielsweise kann beim Wechsel von einer ersten bzw. zuvor ausgewählten Speicherbahn zu einer zweiten bzw. anschließend ausgewählten Speicherbahn ein Abstand bzw. eine Lücke zwischen Stücken der ersten Speicherbahn und Stücken der zweiten Speicherbahn entstehen. Dieser Abstand ist ferner beispielsweise einen Meter größer (länger) als der Abstand zwischen zwei beliebigen hintereinander beförderten Stücken der ersten Speicherbahn.

Folglich muss dieser Abstand ausgeglichen werden. Dies geschieht dadurch, dass die Abführungskomponente sich in Materialflussrichtung der Folge-Förderbahn einen Meter nach vorne bewegt und somit der Überführungspunkt des Förderguts auf die Folge-Förderbahn um den vergrößerten Abstand (1 Meter) nach vorne verlegt wird. Die Transportgeschwindigkeit der Überführungseinrichtung bzw. genauer der Überführungsbahn bleibt hierbei konstant.

Gemäß einer vorteilhaften Weiterbildung der Erfindung ist die Abführungskomponente dazu ausgebildet ist, sich nach dem Bewegen zu der zweiten Position wieder in Richtung der ersten Position zu bewegen.

Das heißt, dass sich die Abführungskomponente wieder in ihre Ausgangsposition zurückbewegt. Dabei ist die Geschwindigkeit vorzugsweise gerade so hoch, dass sich die Abführungskomponente (spätestens) zum Zeitpunkt eines erneuten Speicherbahn-Wechsels in ihrer Ausgangslage, also an der ersten Position befindet.

Ferner ist die Geschwindigkeit der Abführungseinrichtung beim Zurücklegen der Strecke von der zweiten Position zu der ersten Position zumindest im Wesentlichen konstant, sodass ein gleichbleibender Abstand zwischen dem auf der Folge-Förderbahn transportiertem Fördergut erreicht wird.

Gemäß einer vorteilhaften Weiterbildung der Erfindung besteht das Fördergut aus Stückgut, vorzugsweise Behältern.

Beispielsweise kann es sich bei den Behältern um Getränkebehälter bzw. Getränkeverpackungen handeln. Der Speicher kann hierbei beispielsweise hinter einer Füllmaschine der Produktionsstraße angeordnet sein und dafür sorgen, dass die Füllmaschine nicht ausgeschaltet werden muss, wenn Probleme bei der nachfolgenden Maschine auftreten. Bei der nachfolgenden Maschine kann es sich beispielsweise um einen Deckelapplikator, Trinkhalmapplikator oder um eine mit einem Sekundär-Verpackungsteil zusammenhängende Maschine handeln.

Gemäß einer vorteilhaften Weiterbildung der Erfindung weist die Überführungsbahn eine konstante Länge auf.

Gemäß einer vorteilhaften Weiterbildung der Erfindung ist die Überführungseinrichtung, insbesondere die Überführungsbahn, derart flexibel ausgebildet und/ oder mit einem oder mehreren Gelenken ausgestattet, dass sie ein Bewegen der Zuführungskomponente und/oder der Abführungskomponente ausgleichen kann, oder dass die Zuführungskomponente relativ zur Abführungskomponente beweglich ist, bevorzugt bei konstanter Länge der Überführungsbahn.

In diesem Zusammenhang bewegen sich die Zuführungskomponente beim Wechsel der Speicherbahn und die Abführungskomponente zum Ausgleich der durch den Wechsel entstandenen Lücke, wobei dies unabhängig voneinander erfolgt oder erfolgen kann bei konstanter Länge der Überführungsbahn.

Folglich wird die beim Wechsel der Speicherbahn entstandene Lücke eben nicht durch Verändern der Länge oder der Transportgeschwindigkeit der Überführungsbahn ausgeglichen, sondern durch Bewegen der Abführungskomponente und Mitbewegen der Überführungsbahn.

Das Mitbewegen der Überführungsbahn wird dadurch ermöglicht, dass diese flexibel ausgebildet ist, d. h., dass diese derart beweglich ausgebildet ist, dass sie ein Bewegen der Zuführungskomponente und/oder der Abführungskomponente erlaubt. In diesem Zusammenhang ist es denkbar, dass die Überführungseinrichtung mindestens ein Gelenk aufweist und somit insgesamt auch flexibel in diesem Sinne ist.

Gemäß einer vorteilhaften Weiterbildung der Erfindung weist die Überführungsbahn einen bogenförmigen Bereich auf.

Der bogenförmige Bereich kann beim Bewegen der Zuführungskomponente und/oder der Abführungskomponente mitbewegt bzw. abgerollt, wie z.B. analog zu einer Energieführungskette, werden und sorgt dafür, dass die Überführungsbahn die Relativbewegung zwischen Abführungskomponente und Zuführungskomponente ausgleicht.

Gemäß einer vorteilhaften Weiterbildung ist die Fördergeschwindigkeit bzw. Transportgeschwindigkeit der Überführungsbahn zumindest im Wesentlichen konstant.

Selbstverständlich ist die Fördergeschwindigkeit der Überführungsbahn jedoch einstellbar, wobei vorzugsweise zwischen verschiedenen konstanten Geschwindigkeiten ausgewählt werden kann. Im Produktionsbetrieb weist die Überführungsbahn im Wesentlichen die gleiche Fördergeschwindigkeit wie die Folge-Förderbahn auf und beide sind konstant. Die Geschwindigkeit der Überführungsbahn ist an die Geschwindigkeit der Folge-Förderbahn und/oder der nachfolgenden Bearbeitungsstation anpassbar. Je nach nachfolgender Bearbeitungsstation können unterschiedliche Zuführungsgeschwindigkeiten notwendig sein.

Gemäß einer vorteilhaften Weiterbildung der Erfindung ist die Überführungseinrichtung in einer Verpackungsstraße integriert.

Dabei handelt es sich vorzugsweise um eine Produktverpackungsstraße. Insgesamt kann jede der beschriebenen Überführungseinrichtungen in eine Vorrichtung zum kontinuierlichen Fördern von Fördergut eingesetzt bzw. integriert sein.

Die erfindungsgemäße Lösung besteht weiterhin darin, ein Verfahren zum kontinuierlichen Fördern von Fördergut mittels einer Vorrichtung anzugeben, die Folgendes aufweist: einen Speicher mit zumindest einer Mehrzahl von Speicherbahnen, in denen Fördergut angeordnet ist; eine Folge-Förderbahn zu einer Folgeeinrichtung; und eine Überführungseinrichtung, die zwischen dem Speicher und der Folge-Förderbahn angeordnet ist und dazu ausgebildet ist, Fördergut von einer ausgewählten Speicherbahn des Speichers zu der Folge-Förderbahn zu überführen, wobei das Verfahren folgende Schritte aufweist: Aufnehmen von Fördergut mittels einer Zuführungskomponente der Überführungseinrichtung; Überführen des Förderguts von der Zuführungskomponente zu einer Abführungskomponente mittels einer Überführungsbahn; und Abführen des Förderguts an die Folge-Förderbahn mittels der Abführungskomponente, wobei, wenn ein Wechsel der ausgewählten Speicherbahn von einer zuvor ausgewählten Speicherbahn zu einer anschließend ausgewählten Speicherbahn stattfindet, sich die Abführungskomponente derart relativ zu der Folge-Förderbahn bewegt oder umgekehrt, dass trotz Wechsels der ausgewählten Speicherbahn eine kontinuierliche Förderung möglich ist.

Mit dem erfindungsgemäßen Verfahren zum kontinuierlichen Fördern von Fördergut wird die Aufgabe in zufriedenstellender Weise gelöst.

In diesem Zusammenhang gelten selbstverständlich die bezüglich der Überführungseinrichtung bereits genannte Aspekte und beschriebenen Details.

Der Unterschied des Verfahrens zu der vorgenannten Überführungseinrichtung liegt insbesondere darin, dass eine weitere Variante zum Lücken-Ausgleich, also zum Erreichen der kontinuierlichen Förderung, beschrieben ist.

Zum Ausgleichen der durch den Wechsel der Speicherbahn entstandenen Lücke muss sich nämlich nicht zwangsläufig die Abführungskomponente relativ zu der Folge-Förderbahn bewegen. Vielmehr ist auch das umgekehrte Prinzip möglich, bei dem sich die Folge-Förderbahn relativ zu der Abführungskomponente bewegt. Wichtig ist in diesem Zusammenhang lediglich, dass die durch den Wechsel der Speicherbahn entstandene Lücke entsprechend ausgeglichen wird.

Erfindungsgemäß bewegt sich die Abführungskomponente nach einem Wechsel der ausgewählten Speicherbahn von einer ersten Position zu einer zweiten Position an der Folge-Förderbahn, wobei die Distanz zwischen der ersten Position und der zweiten Position der Länge einer Lücke entspricht, die durch den Wechsel der Speicherbahn zwischen einem letzten Stück Fördergut aus einer zuvor ausgewählten Speicherbahn und einem ersten Stück Fördergut aus einer anschließend ausgewählten Speicherbahn entstanden ist.

Dies ist die bereits bei der Übertragungseinrichtung diskutierte Kompensation mittels Bewegens der Übertragungseinrichtung.

Gemäß einer vorteilhaften Weiterbildung der Erfindung bewegt sich die Abführungskomponente nach dem Bewegen zu der zweiten Position wieder in Richtung der ersten Position.

Die Erfindung wird nachstehend anhand der Beschreibung von Ausführungsbeispielen unter Bezugnahme auf die beiliegenden Zeichnungen näher erläutert.

Dabei zeigt:
- FIG. 1: eine schematische Darstellung einer Vorrichtung zum kontinuierlichen Fördern von Fördergut mit einer Überführungseinrichtung gemäß einer Ausführungsform der vorliegenden Erfindung; und
- FIGS. 2a bis 2e: das Funktionsprinzip der Überführungseinrichtung gemäß der vorliegenden Erfindung.

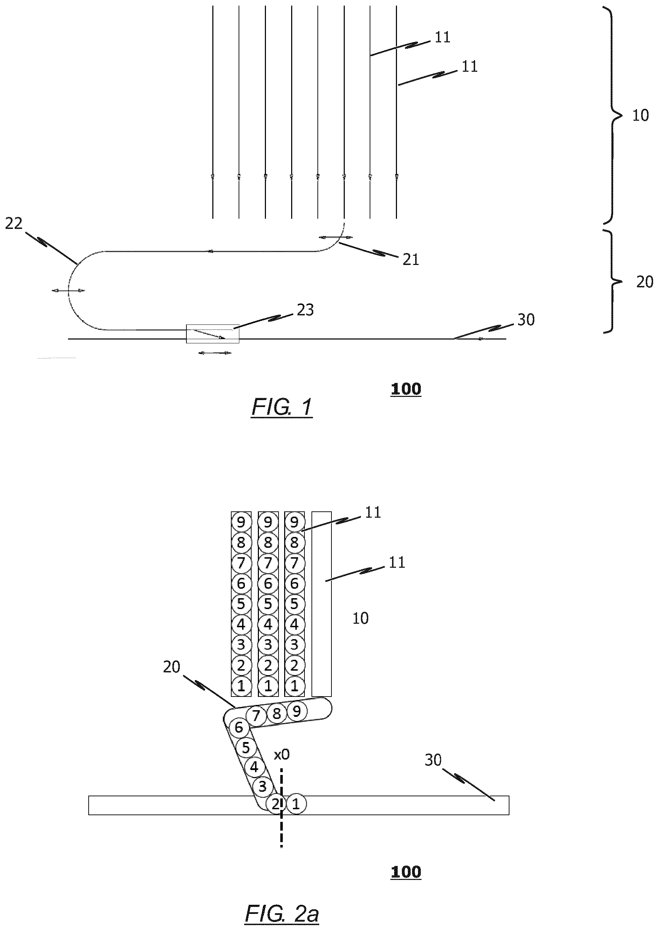

FIG. 1 zeigt eine Vorrichtung 100 zum kontinuierlichen Fördern von Fördergut. Die Vorrichtung 100 weist einen Speicher 10, eine Überführungseinrichtung 20 und eine Folge-Förderbahn 30 auf.

Der Speicher 10 weist eine Vielzahl von Speicherbahnen 11 auf. In dieser Ausführung weist der Speicher 10 exemplarisch acht Speicherbahnen 11 auf.

Der Materialfluss durch die Vorrichtung 100 ist mit einspitzigen Pfeilen gekennzeichnet. Folglich befindet sich der Eingang zum Speicher 10 in FIG. 1 an einem oberen Ende und der Ausgang entsprechend an einem unteren Ende.

Am Ausgang des Speichers 10 ist eine Zuführungskomponente 21 der Überführungseinrichtung 20 angeordnet. Die Überführungseinrichtung 20 erfüllt die Aufgabe, in dem Speicher 10 gelagertes Fördergut von dem Speicher 10, genauer gesagt von den einzelnen Speicherbahnen 11, zu der Folge-Förderbahn 30 zu befördern bzw. überführen.

Die Aufnahme des Förderguts erfolgt hierbei mittels der Zuführungskomponente 21. Wie mittels eines zweispitzigen Pfeils dargestellt, ist die Zuführungskomponente 21 zwischen den Speicherbahnen 11 verschiebbar. Genauer gesagt ist die Zuführungskomponente 21 zwischen im Materialfluss abwärts liegenden Enden der Speicherbahnen 11 verschiebbar bzw. bewegbar.

In dem in FIG. 1 dargestellten Zustand der Vorrichtung 100 ist die Zuführungskomponente 21 an der dritten Speicherbahn 11 von rechts angeordnet, d. h., dass diese Speicherbahn 11 momentan ausgewählt ist, also von dieser Fördergut aufgenommen werden kann.

Das Fördergut wird entlang einer Überführungsbahn 22 der Überführungseinrichtung 20 zu einer Abführungskomponente 23 befördert.

Die Abführungskomponente 23 überführt das Fördergut zu der Folge-Förderbahn 30. Dabei ist auch die Abführungskomponente 23 bewegbar ausgebildet. Insbesondere ist diese relativ zu (und entlang) der Folge-Förderbahn 30 bewegbar. Auch dies ist in FIG. 1 mittels eines zweispitzigen Pfeils dargestellt.

Beim Bewegen der Zuführungskomponente 21 und/oder der Abführungskomponente 23 kann die Überführungsbahn 22, wie durch einen weiteren Doppelpfeil angedeutet, mitbewegt werden. D. h., die Überführungsbahn 22 ist flexibel.

Wenn beispielsweise die dritte Speicherbahn 11 von rechts in FIG. 1 leer ist, muss zu einer anderen Speicherbahn 11 gewechselt werden. Dazu fährt die Zuführungskomponente 21 von der dritten Speicherbahn 11 von rechts 11 zu einer anderen gefüllten Speicherbahn 11, um von dieser Fördergut aufnehmen zu können.

Während des Wechsels der Förderbahn 11 entsteht eine Lücke, die größer ist als der Abstand, der im sonstigen Ablauf zwischen Stücken des Förderguts besteht. Somit ist eine kontinuierliche Förderung zunächst gestört.

Die Überführungseinrichtung 20 gleicht dies damit aus, dass die Abführungskomponente 23 so weit in Materialflussrichtung der Folge-Förderbahn 30, d. h. in FIG. 1 nach rechts, verschoben wird, dass die Lücke ausgeglichen werden kann. Somit ist auf der Folge-Förderbahn 30 wieder eine kontinuierliche Förderung, d. h. eine Förderung mit gleichbleibendem Abstand zwischen den zu fördernden Stücken, möglich.

Genauer ist dieses Ausgleichs-Prinzip der Überführungseinrichtung 20 in den FIGS. 2a bis 2e gezeigt. Hierbei ist der Speicher 10 mit vier Speicherbahnen 11 dargestellt, wobei in jeder Speicherbahn 11 exemplarisch neun Stücke Fördergut gelagert sind.

Insbesondere zeigen die FIGS. 2a bis 2e (im Produktionsablauf) chronologisch geordnete Zustände der Vorrichtung 100 bzw. der Überführungseinrichtung 20.

Dabei zeigt FIG. 2a den Zustand der Vorrichtung 100 bei der Förderung von Fördergut aus einer ersten, und zwar der rechten Speicherbahn 11. In diesem Zustand wird das Fördergut von der Abführungskomponente 23 an der Position x0 an die Folge-Förderbahn 30 überführt.

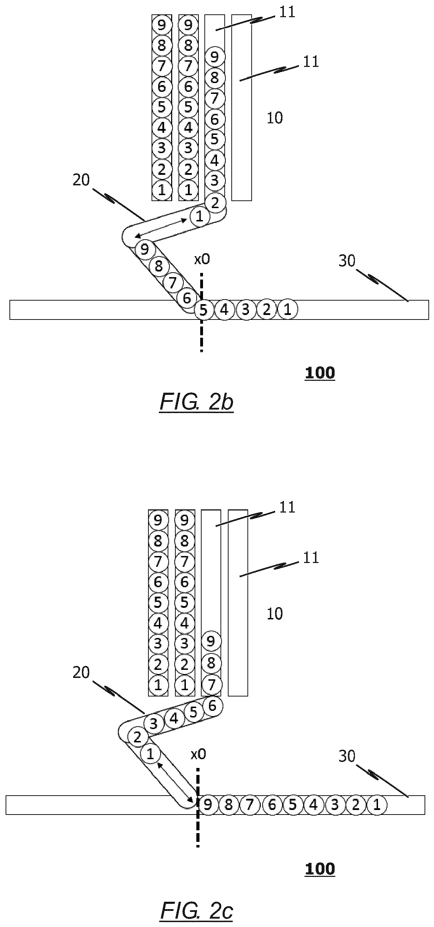

FIG. 2b zeigt den Zustand nach einem Wechsel von der rechten Speicherbahn 11 zu einer benachbarten Speicherbahn 11. Dabei befindet sich bereits das Fördergut der rechten Speicherbahn 11 vollständig auf der Überführungsbahn 22. Außerdem ist zu erkennen, dass durch den Wechsel eine Lücke zwischen dem letzten Stück Fördergut 9 aus der rechten Speicherbahn 11 und dem ersten Stück Fördergut 1 aus der benachbarten Speicherbahn 11 entstanden ist.

Dieser Abstand kann bei der nachfolgenden Maschine, die von der Folge-Förderbahn 30 versorgt wird, zu Problemen im Produktionsablauf führen.

FIG. 2c zeigt einen späteren Zustand der Vorrichtung 100, bei dem bereits alle aus der rechten Speicherbahn 11 stammenden Stücke Fördergut (Stücke 1-9) auf die Folge-Förderbahn 30 überführt worden sind.

Wenn die Abführungskomponente 23 der Überführungseinrichtung 20 jetzt an der Position x0 stehen bleiben würde, würde als nächstes die Lücke an die Folge-Förderbahn 30 weitergegeben.

Um dies zu verhindern, fährt die Abführungskomponente 23 in Materialflussrichtung der Folge-Förderbahn 30, d.h. in den FIGS. 2a bis 2e nach rechts. Dies erhöht die Absolutgeschwindigkeit des Förderguts.

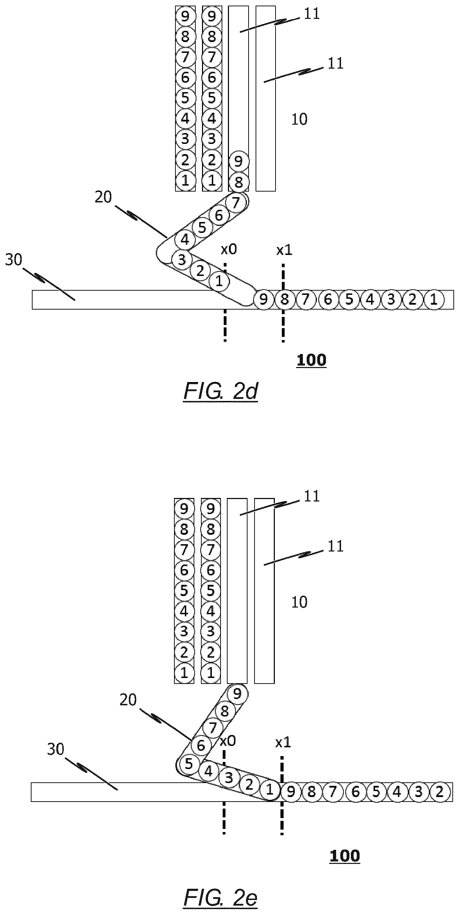

FIG. 2d zeigt diesbezüglich einen Zustand der Vorrichtung 100, bei dem die Abführungskomponente 23 sich bereits so weit in diese Richtung bewegt hat, dass etwa die Hälfte der zurückzulegenden Strecke zurückgelegt ist. Die insgesamt zurückzulegende Strecke der Abführungskomponente 23 (Distanz von x0 zu x1) entspricht dem auszugleichenden Abstand auf der Überführungsbahn 22, also der Größe der Lücke zwischen dem letzten Stück Fördergut 9 aus der rechten Speicherbahn 11 und dem ersten Stück 1 aus der benachbarten Förderbahn 11.

In FIG. 2e ist die Abführungskomponente 23 bis zu der Position x1 auf der Folge-Förderbahn 30 vorgefahren. Hier ist zu erkennen, dass die Lücke zwischen dem letzten Stück Fördergut 9 aus der rechten Speicherbahn 11 und dem ersten Stück Fördergut 1 aus der benachbarten Speicherbahn 11 vollständig kompensiert worden ist. Entsprechend kann zu diesem Zeitpunkt wieder eine kontinuierliche Förderung auf der Folge-Förderbahn 30 geleistet werden.

In diesem Zusammenhang wird bevorzugt, dass die Abführungskomponente 23 nach Erreichen der Position x1 während des Überführens des Förderguts langsam wieder in Richtung x0 bewegt wird. Dies ermöglicht eine wiederholte Kompensierung bzw. einen wiederholten Ausgleich durch die Überführungseinrichtung 20. Hierdurch entsteht zwar eine leicht größere Lücke zwischen den einzelnen Stücken Fördergut, allerdings sind die Lücken alle zumindest im Wesentlich gleich groß, sodass die kontinuierliche Förderung auf der Folge-Förderbahn 30 nicht gestört ist.

### Bezugszeichenliste

- 100: Vorrichtung zum kontinuierlichen Überführen von Fördergut
- 1-9: Stücke Fördergut
- 10: Speicher
- 11: Speicherbahn
- 20: Überführungseinrichtung
- 21: Zuführungskomponente
- 22: Überführungsbahn
- 23: Abführungskomponente
- 30: Folge-Förderbahn
- x0: erste Postion der Abführungskomponente
- x1: zweite Position der Abführungskomponente

## Patentansprüche

1. Vorrichtung (100) zum kontinuierlichen Fördern von Fördergut, wobei die Vorrichtung (100) folgendes aufweist:
- einen Speicher (10) mit zumindest einer Mehrzahl, vorzugsweise einer Vielzahl, von Speicherbahnen (11), in denen Fördergut angeordnet ist;
- eine Folge-Förderbahn (30) zu einer Folgeeinrichtung; und
- eine Überführungseinrichtung (20), die zwischen dem Speicher (10) und der Folge-Förderbahn (30) angeordnet ist und dazu ausgebildet ist, Fördergut von einer ausgewählten Speicherbahn (11) des Speichers (10) zu der Folge-Förderbahn (30) zu überführen, und wobei die Überführungseinrichtung (20) folgendes aufweist:
- eine Zuführungskomponente (21), die dazu ausgebildet ist, von der ausgewählten Speicherbahn (11) Fördergut aufzunehmen;
- eine Abführungskomponente (23) die dazu ausgebildet ist, das Fördergut an die Folge-Förderbahn (30) abzuführen;
- eine Überführungsbahn (22), die dazu ausgebildet ist, das Fördergut von der Zuführungskomponente (21) zu der Abführungskomponente (23) zu überführen,
**dadurch gekennzeichnet, dass**
die Abführungskomponente (23) so ausgebildet ist, dass sie relativ zu der Folge-Förderbahn (30) derart bewegbar ist, dass selbst beim Wechsel der ausgewählten Speicherbahn (11) eine kontinuierliche Förderung möglich ist, und wobei die Abführungskomponente (23) dazu ausgebildet ist, sich nach einem Wechsel der ausgewählten Speicherbahn (11) von einer ersten Position (x0) zu einer zweiten Position (x1) an der Folge-Förderbahn (30) zu bewegen, wobei die Distanz zwischen der ersten Position (x0) und der zweiten Position (x1) der Länge einer Lücke entspricht, die durch den Wechsel der Speicherbahn (11) zwischen einem letzten Stück Fördergut (9) aus einer zuvor ausgewählten Speicherbahn (11) und einem ersten Stück Fördergut (1) aus einer anschließend ausgewählten Speicherbahn (11) entstanden ist.

2. Vorrichtung (100) gemäß Anspruch 1,
wobei die Zuführungskomponente (21) dazu ausgebildet ist, sich beim Wechsel der ausgewählten Speicherbahn (22) von einer zuvor ausgewählten Speicherbahn (11) zu einer anschließend ausgewählten Speicherbahn (11) zu bewegen.

3. Vorrichtung (100) gemäß Anspruch 1 oder 2,
wobei die Abführungskomponente (23) dazu ausgebildet ist, sich nach dem Bewegen zu der zweiten Position (x1) wieder in Richtung der ersten Position (x0) zu bewegen.

4. Vorrichtung (100) gemäß einem der vorherigen Ansprüche,
wobei die Überführungsbahn (22) eine konstante Länge aufweist.

5. Vorrichtung (100) gemäß einem der vorherigen Ansprüche,
wobei die Überführungseinrichtung (20), insbesondere die Überführungsbahn (22), derart flexible ausgebildet ist, dass sie ein Bewegen der Zuführungskomponente (21) und/oder der Abführungskomponente (23) ausgleichen kann.

6. Vorrichtung (100) gemäß einem der vorherigen Ansprüche,
wobei die Überführungsbahn (22) einen bogenförmigen Bereich aufweist.

7. Vorrichtung (100) gemäß einem der vorherigen Ansprüche,
wobei die Fördergeschwindigkeit der Überführungsbahn (20) zumindest im Wesentlichen konstant ist.

8. Vorrichtung (100) gemäß einem der vorherigen Ansprüche,
wobei die Überführungseinrichtung (20) in einer Verpackungsstraße integriert ist.

9. Verfahren zum kontinuierlichen Fördern von Fördergut mittels einer Vorrichtung (100), die folgendes aufweist:
- einen Speicher (10) mit zumindest einer Mehrzahl, vorzugsweise einer Vielzahl, von Speicherbahnen (11), in denen Fördergut angeordnet ist;
- eine Folge-Förderbahn (30) zu einer Folgeeinrichtung; und
- eine Überführungseinrichtung (20), die zwischen dem Speicher (10) und der Folge-Förderbahn (30) angeordnet ist und dazu ausgebildet ist, Fördergut von einer ausgewählten Speicherbahn (11) des Speichers (10) zu der Folge-Förderbahn (30) zu überführen,
wobei das Verfahren folgende Schritte aufweist:
- Aufnehmen von Fördergut mittels einer Zuführungskomponente (21) der Überführungseinrichtung (20);
- Überführen des Förderguts von der Zuführungskomponente (21) zu einer Abführungskomponente (23) mittels einer Überführungsbahn (22); und
- Abführen des Förderguts an die Folge-Förderbahn (30) mittels der Abführungskomponente (23),
**dadurch gekennzeichnet, dass**
wenn ein Wechsel der ausgewählten Speicherbahn (11) von einer zuvor ausgewählten Speicherbahn (11) zu einer anschließend ausgewählten Speicherbahn (11) stattfindet, sich die Abführungskomponente (23) derart relativ zu der Folge-Förderbahn (30) bewegt oder umgekehrt, dass trotz des Wechsels der ausgewählten Speicherbahn (11) eine kontinuierliche Förderung möglich ist,
wobei die Abführungskomponente (23) sich nach einem Wechsel der ausgewählten Speicherbahn (11) von einer ersten Position (x0) zu einer zweiten Position (x1) an der Folge-Förderbahn (30) bewegt, wobei die Distanz zwischen der ersten Position (x0) und der zweiten Position (x1) der Länge einer Lücke entspricht, die durch den Wechsel der Speicherbahn (11) zwischen einem letzten Stück Fördergut (9) aus einer zuvor ausgewählten Speicherbahn (11) und einem ersten Stück Fördergut (1) aus einer anschließend ausgewählten Speicherbahn (11) entstanden ist.

10. Verfahren zum kontinuierlichen Fördern von Fördergut gemäß Anspruch 9, wobei sich die Abführungskomponente (23) oder die Folge-Förderbahn (30) nach dem Bewegen zu der zweiten Position wieder in Richtung der ersten Position bewegt.

## Claims

1. An apparatus (100) for continuously conveying conveyable items, wherein the apparatus (100) comprises:
- a storage unit (10) having at least a plurality, preferably a multiplicity, of storage tracks (11) in which conveyable items are arranged;
- a subsequent conveyor track (30) to a subsequent device; and
- a transfer device (20) arranged between the storage unit (10) and the subsequent conveyor track (30) and configured so as to transfer conveyable items from a selected storage track (11) of the storage unit (10) to the subsequent conveyor track (30),
and wherein the transfer device (20) comprises:
- a feed component (21) configured so as to receive conveyable items from the selected storage track (11);
- a discharge component (23) configured so as to discharge the conveyable items to the subsequent conveyor track (30) ;
- a transfer track (22) configured so as to transfer the conveyable items from the feed component (21) to the discharge component (23),
**characterized in that** the discharge component (23) is configured so as to be movable in relation to the subsequent conveyor track (30) in such a way that, even when the selected storage track (11) is changed, a continuous conveyance is possible, and wherein the discharge component (23) is configured so as to move from a first position (x0) to a second position (x1) on the subsequent conveyor track (30) after a change of the selected storage track (11), wherein the distance between the first position (x0) and the second position (x1) corresponds to the length of a gap, which has arisen due to the change of the storage track (11) between a last piece of conveyable items (9) from a previously selected storage track (11) and a first piece of conveyable items (1) from a subsequently selected storage track (11).

2. The apparatus (100) according to claim 1,
wherein the feed component (21) is configured so as to move from a previously selected storage track (11) to a subsequently selected storage track (11) upon a change of the selected storage track (22).

3. The apparatus (100) according to claim 1 or 2,
wherein the discharge component (23) is configured so as to move back toward the first position (x0) after moving to the second position (x1).

4. The apparatus (100) according to any one of the preceding claims,
wherein the transfer track (22) has a constant length.

5. The apparatus (100) according to any one of the preceding claims,
wherein the transfer device (20), in particular the transfer track (22), is configured so as to be flexible in such a way that it is capable of compensating for a movement of the feed component (21) and/or the discharge component (23).

6. The apparatus (100) according to any one of the preceding claims,
wherein the transfer track (22) comprises an arcuate region.

7. The apparatus (100) according to any one of the preceding claims,
wherein the conveying speed of the transfer track (20) is at least substantially constant.

8. The apparatus (100) according to any one of the preceding claims,
wherein the transfer device (20) is integrated in a packaging line.

9. A method for continuously conveying conveyable items by means of an apparatus (100) comprising the following:
- a storage unit (10) having at least a plurality, preferably a multiplicity, of storage tracks (11) in which conveyable items are arranged;
- a subsequent conveyor track (30) to a subsequent device; and
- a transfer device (20) arranged between the storage unit (10) and the subsequent conveyor track (30) and configured so as to transfer conveyable items from a selected storage track (11) of the storage unit (10) to the subsequent conveyor track (30),
wherein the method comprises the following steps:
- receiving conveyable items by means of a feed component (21) of the transfer device (20);
- transferring the conveyable items from the feed component (21) to a discharge component (23) by means of a transfer track (22); and
- discharging the conveyable items to the subsequent conveyor track (30) by means of the discharge component (23),
**characterized in that** when there is a change of the selected storage track (11) from a previously selected storage track (11) to a subsequently selected storage track (11), the discharge component (23) moves in relation to the subsequent conveyor track (30) or vice versa in such a way that a continuous conveyance is possible despite the change of the selected storage track (11), wherein the discharge component (23) moves from a first position (x0) to a second position (x1) on the subsequent conveyor track (30) after a change of the selected storage track (11), wherein the distance between the first position (x0) and the second position (x1) corresponds to the length of a gap, which has arisen due to the change of the storage track (11) between a last piece of conveyable items (9) from a previously selected storage track (11) and a first piece of conveyable items (1) from a subsequently selected storage track (11).

10. A method for continuously conveying conveyable items according to claim 9,
wherein the discharge component (23) or the subsequent conveyor track (30) moves back toward the first position after moving to the second position.

## Revendications

1. Appareil (100) pour le transport d'un matériau en continu, dans lequel l'appareil (100) comprend :
- une unité de stockage (10) ayant au moins une pluralité, de préférence un grand nombre, de bandes de stockage (11) dans lesquelles du matériau est agencé ;
- une bande transporteuse (30) suivante vers un dispositif suivant ; et
- un dispositif de transfert (20) agencé entre l'unité de stockage (10) et la bande transporteuse (30) suivante et configuré de manière à transférer le matériau provenant d'une bande de stockage (11) sélectionnée de l'unité de stockage (10) à la bande transporteuse (30) suivante,
et dans lequel le dispositif de transfert (20) comprend :
- un élément d'alimentation (21) configuré de manière à recevoir un matériau provenant de la bande de stockage (11) sélectionnée ;
- un élément de décharge (23) configuré de manière à décharger le matériau sur la bande transporteuse (30) suivante ;
- une bande de transfert (22) configurée de manière à transférer le matériau provenant de l'élément d'alimentation (21) à l'élément de décharge (23),
**caractérisé en ce que** l'élément de décharge (23) est configuré de manière à pouvoir être mobile par rapport à la bande transporteuse (30) suivante de sorte que, même lorsque la bande de stockage (11) sélectionnée est changée, un transport continu est possible, et dans lequel l'élément de décharge (23) est configuré de manière à se déplacer à partir d'une première position (x0) jusqu'à une deuxième position (x1) sur la bande transporteuse (30) suivante après un changement de la bande de stockage (11) sélectionnée, dans lequel la distance entre la première position (x0) et la deuxième position (x1) correspond à la longueur d'un espace, qui est apparu du fait du changement de la bande de stockage (11) entre une dernière pièce de matériau (9) provenant d'une bande de stockage (11) sélectionnée préalablement et une première pièce de matériau (1) provenant d'une bande de stockage (11) sélectionnée ultérieurement.

2. Appareil (100) selon la revendication 1,
dans lequel l'élément d'alimentation (21) est configuré de manière à se déplacer à partir d'une bande de stockage (11) sélectionnée préalablement jusqu'à une bande de stockage (11) sélectionnée ultérieurement lors d'un changement de la bande de stockage (22) sélectionnée.

3. Appareil (100) selon la revendication 1 ou 2,
dans lequel l'élément de décharge (23) est configuré de manière à revenir vers la première position (x0) après le déplacement vers la deuxième position (x1).

4. Appareil (100) selon l'une quelconque des revendications précédentes,
dans lequel la bande de transfert (22) a une longueur constante.

5. Appareil (100) selon l'une quelconque des revendications précédentes,
dans lequel le dispositif de transfert (20), en particulier la bande de transfert (22), est configuré de manière à être flexible de sorte qu'il est capable de la compensation d'un mouvement de l'élément d'alimentation (21) et/ou de l'élément de décharge (23).

6. Appareil (100) selon l'une quelconque des revendications précédentes,
dans lequel la bande de transfert (22) comprend une région arquée.

7. Appareil (100) selon l'une quelconque des revendications précédentes,
dans lequel la vitesse de transport de la bande de transfert (20) est au moins sensiblement constante.

8. Appareil (100) selon l'une quelconque des revendications précédentes,
dans lequel le dispositif de transfert (20) est intégré dans une ligne d'emballage.

9. Procédé de transport de matériau en continu au moyen d'un appareil (100) comprenant ce qui suit :
- une unité de stockage (10) ayant au moins une pluralité, de préférence un grand nombre, de bandes de stockage (11) dans lesquelles du matériau est agencé ;
- une bande transporteuse (30) suivante vers un dispositif suivant ; et
- un dispositif de transfert (20) agencé entre l'unité de stockage (10) et la bande transporteuse (30) suivante et configuré de manière à transférer le matériau provenant d'une bande de stockage (11) sélectionnée de l'unité de stockage (10) à la bande transporteuse (30) suivante,
dans lequel le procédé comprend les étapes suivantes :
- la réception de matériau au moyen d'un élément d'alimentation (21) du dispositif de transfert (20) ;
- le transfert du matériau provenant de l'élément d'alimentation (21) à un élément de décharge (23) au moyen d'une bande de transfert (22) ; et
- le déchargement du matériau sur la bande transporteuse (30) suivante au moyen de l'élément de décharge (23),
**caractérisé en ce que**, lorsqu'il y a un changement de la bande de stockage (11) sélectionnée à partir d'une bande de stockage (11) sélectionnée préalablement jusqu'à une bande de stockage sélectionnée (11) ultérieurement, l'élément de décharge (23) se déplace par rapport à la bande de transport (30) suivante ou vice versa d'une façon telle qu'un transport continu est possible malgré le changement de la bande de stockage (11) sélectionnée, dans lequel l'élément de déchargement (23) se déplace à partir d'une première position (x0) jusqu'à une deuxième position (x1) sur la bande transporteuse (30) suivante après un changement de la bande de stockage (11) sélectionnée, dans lequel la distance entre la première position (x0) et la deuxième position (x1) correspond à la longueur d'un espace, qui est apparu du fait du changement de la bande de stockage (11) entre une dernière pièce de matériau (9) provenant d'une bande de stockage (11) sélectionnée préalablement et une première pièce de matériau (1) provenant d'une bande de stockage (11) sélectionnée ultérieurement.

10. Procédé pour le transport en continu d'un matériau selon la revendication 9,
dans lequel l'élément de décharge (23) ou la bande transporteuse (30) suivante revient vers la première position après le déplacement vers la deuxième position.
